Europäisches Patentamt

European Patent Office

Office européen des brevets

(11) Publication number: **0 136 084**
A2

# EUROPEAN PATENT APPLICATION

(21) Application number: **84305816.5**

(51) Int. Cl.⁴: **G 01 V 1/28**

(22) Date of filing: **24.08.84**

(30) Priority: **25.08.83 US 526538**

(43) Date of publication of application: **03.04.85**
Bulletin 85/14

(84) Designated Contracting States: **AT BE CH DE FR GB IT
LI LU NL SE**

(71) Applicant: **Geophysical Exploration Research and
Development Program, 858 West Jackman, Suite 202,
Lancaster California 93538 (US)**

(72) Inventor: **Gibbons, John F., 1010 Fruit Avenue N.W.,
Albuquerque New Mexico 87102 (US)**
Inventor: **Tuttle, John R., P.O. Box 1648, Corrales New
Mexico 87048 (US)**
Inventor: **Newell, Robert T., Rural Route 3, Box 1156, Los
Lunas New Mexico 87031 (US)**

(74) Representative: **Stephens, Michael John, M.J. Stephens
& Co. 46 Tavistock Place, Plymouth PL4 8AX (GB)**

(54) Geophysical exploration method and apparatus.

(57) Geophysical exploration methods are known for deter-
mining the vertical location of a subterranean seismic energy
reflection boundary (12) in a geological formation (11). These
methods generally involve the artificial creation of seismic p
waves in a geologic formation (11) and the measurement of the
time taken for the wave to be reflected from the subterranean
boundary (12) back to another point (C), remote from the
initiation point (A), on the surface (10) of the formation (11).
The sensing of the arrival of the p wave at the measurement
point (C) is far from simple due to the presence of surface-
travelling R waves, of much greater amplitude, created at the
same time as the p wave.

To facilitate the detection of the p wave, its signal-to-
noise ratio is improved by measuring both the vertical ve-
locity/displacement and tilt of the surface (10) at the meas-
urement point (C) and combining the measured data.

## GEOPHYSICAL EXPLORATION METHOD AND APPARATUS

The present invention relates to a geophysical exploration method and apparatus for determining the depth of a seismic reflection boundary in a geologic formation by the measurement of artificially induced seismic waves reflected back from the boundary. More particularly, the invention relates to such a method and apparatus in which the effect on the measurement of the reflected wave of natural or artificial waveforms moving along the surface of the geologic formation is substantially suppressed.

Geophysical exploration systems and methods are known in the art which involve the artificial creation of seismic waves in a geologic formation and the measurement of the time of arrival of such waves at another point, remote from the initiation point, in or on the surface of the structure. Simple geometric relationships permit the use of this technique to determine the depth of a subterranean boundary in the geologic formation which reflects certain of the downwardly directed waves upwardly to the surface receiving point.

Two basic types of seismic waves are, in fact, initiated when energy is introduced into a geologic structure - body waves, which consist of so-called "p waves" (Primary) and "s waves" (secondary), and surface waves. P waves are longitudinal waves in which the particle motion is parallel to the direction of propagation. The s waves are transverse waves in which the particle motion is perpendicular to the direction of propagation. On the surface of a semi-infinite solid, such as the earth, surface waves such as Rayleigh waves, Love waves, Stonely waves and other natural or artificial waves are

0136084

- 2 -

also propagated. We designate these surface waves to be "R waves" to differentiate them from s waves.

The general prior art exploration method thus includes the steps of introducing a pulse of seismic energy into the geologic formation at point $X_o$ thereby to induce an R wave and a p wave; measuring the time for the p wave to travel through the formation from initiation point to the measurement point by reflection from the subterranean boundary, this measurement involving the sensing of the arrival of the p wave at the measurement point; and calculating the depth of the boundary from the geometric relationships of the initiating and measurement points, the depth and the lengths of the R wave and p wave paths, the velocity of the p and R waves being known or estimated.

In these prior art geophysical exploration systems and methods which use the time of arrival at the measurement point of the p waves reflected from a reflection boundary to calculate the depth of the boundary, the s waves can be ignored or easily accounted for as they are perpendicular to the reflected p wave. However, the R waves which may have an amplitude several orders of magnitude greater than the p wave, make it extremely difficult to detect the arrival of the reflected p wave at the measurement point. Thus, using conventional seismic sensors, the "noise" generated by the R waves effectively masks p wave signals to the point that they are practically unrecognizable and unidentifiable without the use of a highly sophisticated signal filtering and processing equipment arrangement utilizing multiple sensor inputs. This problem is considerably aggravated by stray R waves induced by natural or artificial sources other than those involved in the seismic exploration system.

It would, therefore, be highly advantageous to provide a geophysical exploration method which did not require the use of such sophisticated signal filtering and/or processing steps and which uses simplified conventional sensors located at a single measurement point. It would also be highly advantageous to provide a geophysical exploration method in which the sensor signal-to-noise ratio is increased and in which the R wave noise is substantially reduced or cancelled to enhance the accuracy of detection of the time of arrival of the p waves at the measurement point.

Accordingly, it is an object of the present invention to provide a geophysical exploration method in which interference caused by extraneous waves moving along the surface of a geologic formation is suppressed with respect to the wave of interest at this same surface. A further object of the invention is to provide such a method which employs simplified sensor equipment and which does not require sophisticated noise-filtering or signal-conditioning equipment or steps.

In accordance with the present invention, these objects are achieved with the aforesaid general prior art method by sensing the time of arrival of the p wave at the measuring point in a manner minimising the effects of the R wave-induced noise, this sensing being effected by the steps of:

    a)   measuring at the measurement point,
        (i) the vertical velocity or displacement of the surface caused by the continued R and p waves, and
        (ii) the tilt of the surface caused by the passage of the R and p waves, and
    b)   correlating the measured tilt and velocity (or displacement) data to cancel the effect of the R wave-induced noise.

The cancellation of the effect of the R wave-induced noise is based on the fact that the interfering effects of any wave which has a constant phase velocity along the surface of a geologic formation can be suppressed with respect to another wave which has a different phase velocity along the same surface. Thus, in a presently preferred embodiment of the present invention, the vertical velocity and tilt of the surface of the formation caused by the passage of the p and R waves at the measurement point are used to identify the time of arrival of the p wave at the measurement point, according to the relationship $(dw/dt)_p = (dw/dt)_{R,p} - C_R(dw/dx)_{R,p}$ where $dw/dt$ is the time derivative of the vertical displacement (vertical velocity) attributable to the passage of the indicated waves, $C_R$ is the velocity of the R wave and $dw/dx$ is the slope induced by the passage of the indicated waves. It will be apparent to those skilled in the art that the presently preferred technique, described above, is non-limiting and is presented only for purposes of illustration and not by way of limitation.

The present invention also provides geophysical apparatus for implementing the method of the invention.

A geophysical exploration method according to the invention and geophysical exploration apparatus embodying the invention will now be particularly described, by way of example with reference to the accompanying diagrammatic drawings, in which;

Fig.1 is a sectional diagram of a simplified geologic formation showing the geometry and variables associated with the typical seismic exploration problem; and

- 5 -

Fig. 2 is a schematic diagram of an analog electronic circuit used for real-time elimination of R wave noise signals from vertical velocity signals to provide a low-noise p wave signal in accordance with the exploration method of the invention.

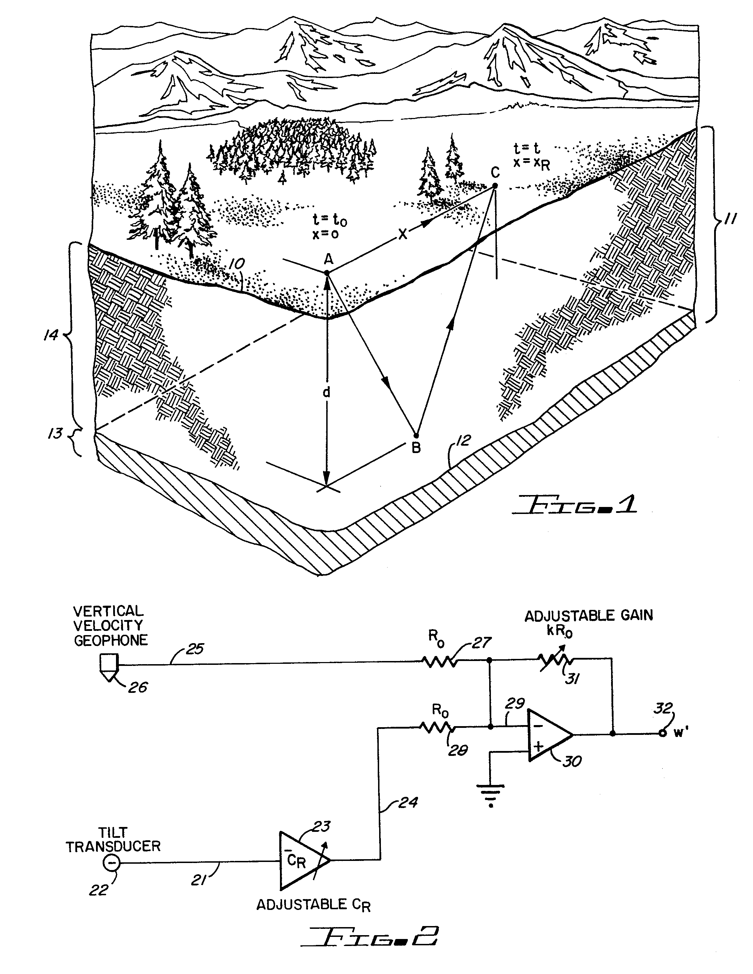

Reference is made to Fig. 1, which depicts the geometry of a typical seismic exploration problem. X is the horizontal distance from a point A in the surface 10 of a geologic formation 11 to C, another point in the surface 10. B is a point on the upper surface 12 of a subterranean seismic energy reflecting boundary layer 13. A seismic energy pulse (e.g., small explosive charge, mechanical impact, etc.) input at A (X=0) causes p and R-type seismic waves to arrive at point C. The R waves travel horizontally in the surface from A to C with a velocity $C_R$ and the reflected p waves travel the path ABC with a velocity $\alpha$. $C_R$ and $\alpha$ are either known (e.g. by measurement) or fairly accurately estimated by techniques known in the art, for example, by the equations:

$$\alpha = ([K+4G/3]/\rho)^{1/2} \qquad (1)$$

$$C_R = C(G/\rho)^{1/2} \qquad (2)$$

where K is the bulk modulus of the geologic layer 14, $\rho$ is the density, G is the shear modulus, and C is a constant slightly less than unity (ranging from about 0.9 to about 0.99).

The propagation distance AC of the R wave in the surface 10 at a time t elapsed since the commencement of seismic energy input is

$$x_R = C_R t \qquad (3)$$

- 6 -

and that of the reflected p wave is

$$x_p = 2((\alpha t/2)^2 - d^2)^{1/2} \qquad (4)$$

The vertical displacement w of the surface 10 at C will be a function of x and t, i.e., $w = w(x,t)$.

By the chain rule for derivatives,

$$(dw/dt) = (dw/dx)(dx/dt) \qquad (5)$$

$(dw/dx)$ is the ground slope or tilt at C with respect to its rest position. Therefore, Equation (5) states that the vertical velocity at a surface point defined by x at time t is equal to the product of the ground tilt and wave phase velocity at that point. $(dw/dt)_R$, the vertical velocity at C caused by the R wave, and $(dw/dt)_p$, the vertical velocity at C caused by the reflected p wave, can be calculated using Equations (3) and (4) in (5)

$$(dw/dt)_R = C_R(dw/dx)_R \qquad (6)$$

$$(dw/dt)_p = (dw/dx)_p \, \alpha/(1-(2d/\alpha t)^2)^{1/2} \qquad (7)$$

where $(dw/dt)_{R,p} = (dw/dt)_R + (dw/dt)_p$, is the total vertical velocity measured at point C, and $(dw/dx)_{R,p} = (dw/dx)_R + (dw/dx)_p$ is the total tilt measured at point C.

In order to eliminate the effects of R waves at point C, the present exploration method involves the measurement of the vertical velocity $(dw/dt)_{R,p}$ and tilt $(dw,dx)_{R,p}$ at point C; this data is then used to calculate the quantity

$$dw'/dt = (dw/dt)_{R,p} - C_R(dw/dx)_{R,p} \qquad (8)$$

Using equations (6) and (7) in (8), we find

$$dw'/dt = (dw/dt)_p[1-(C_R/\alpha)(1-(2d/\alpha t)^2)^{1/2}] . \qquad (9)$$

Therefore, the resultant quantity (dw'/dt) is free of the effects of R waves, and closely approximates the desired signals $(dw/dt)_p$.

Since $C_R/\alpha$ is approximately 0.5 for most soils, the maximum effect on the received p wave vertical velocity is an amplitude reduction by roughly a factor of 2 at $t = \infty$. This is a negligible degradation of the reflected p wave vertical velocity at point C in comparison to the large gain in signal-to-noise obtained by elimination of the R wave effect (typically a factor of 100 to 10,000).

The arrival of the p wave at the measurement point C can be identified by equation (8) in integrated form:

$$w_p \simeq w_{R,p} - C_R \int_0^t (dw/dx)_{R,p} \, dt \qquad (10)$$

or by its mathematical equivalent in differential form:

$$(dw/dt)_p \simeq (dw/dt)_{R,p} - C_R (dw/dx)_{R,p} \qquad (11)$$

It will be understood by those skilled in the art that equations 10 and 11 identically embody the same mathematical concept and that these equations may be and are used inter-changeably herein and in the claims appended hereto. However, for clarity of illustration, the differential form is preferred since the total vertical velocity $(dw/dt)_{R,p}$ is the output of a conventional geophone (G) and $(dw/dt)_R$ is approximately equal to a constant $(C_R)$ times the output of a conventional tiltmeter T. Thus, it is seen that the vertical velocity due to the p wave

$$(dw/dt)_p \simeq G - C_C T \qquad (12)$$

Reference is now made to Fig. 2, which depicts for purposes of illustration and not by way of limitation, an analog electronic circuit which is used in accordance with the presently preferred embodiment of the invention for real-time elimination of the surface wave noise from vertical velocity seismic data. The output 21 of a tilt transducer 22 is applied as the input to an adjustable gain operational amplifier 23 which provides for multiplication of the tilt 21 by an adjustable constant, $-C_R$. The multiplied output 24 is added to the output 25 of a vertical velocity geophone 26 through the series resistances 27 and 28. The summed output 29 is finally amplified via the operational amplifier 30 which has adjustable gain controlled by negative feedback resistance 31.

The output 32 is storable real-time seismic data free of R wave noise. Alternatively, signals 25 (geophone) and 21 or 24 (tilt transducer) can be stored for post-processing.

A suitable geophone for use in accordance with the invention is described in U.S. Patent No. 4,001,771 to Amrine et al. A suitable tilt transducer is the Rockwell Bubble Tiltmeter described in the paper by Miller et al, Geophys. J.R. Astr. Soc. (1978) 54,661-668. It is also suitable to infer tilt indirectly from two vertical velocity (or displacement) transducers placed along a direction of travel of the R wave and spaced a distance $\Delta R$ apart. For the case of vertical displacement transducers with outputs $w_1$ for the transducer nearer the seismic input point and $w_2$ for the other, the tilt can be inferred via the equation

$$(dw/dx)_{R,p} \simeq (w_w - w_1)_{R,p}/\Delta R \qquad (13)$$

For the case of vertical velocity transducers, this equation becomes

$$(dw/dx)_{R,P} \simeq (1/\Delta R)_0\int^t [(dw_2/dt)_{R,p} - (dw_1/dt)_{R,p}]dt \qquad (14)$$

A suitable vertical velocity transducer for such indirect measurement of tilt is the same geophone mentioned above.

CLAIMS

1. A geophysical exploration method for determining the vertical location of a subterranean seismic energy reflection boundary (12) in a geologic formation (11), said method including the steps of:

introducing a pulse of seismic energy at time $t_0$ into said formation at a point $x_0$ on the surface (10) thereof, thereby inducing a generally horizontal outwardly radiating surface wave R and a generally downwardly radiating compression wave p in said formation (11),

measuring the time $t_p$ for said p wave to travel from $x_0$ a distance $x_p/2$ to said boundary (12) and be reflected to a measurement point (C) on said surface (10) spaced from $x_0$ a distance $x_R$, the measurement of the time $t_p$ involving the sensing of the arrival of the p wave at the measurement point (C), and

calculating the depth d of said reflection boundary (12) from the geometrical relationships of d, $x_0$, C, $x_p$ and $x_R$, the velocities of the p wave, $\alpha$, and R wave, $C_R$, being known or estimated,

characterised in that in order to minimise the effect of the R wave-induced noise on the sensing of the time of arrival of the p wave at the measurement point (C), this sensing is effected by the steps of:

(a) measuring at measurement point (C)
   (i)  the vertical velocity $(dw/dt)_{R,p}$ or displacement $(w)_{R,p}$ of the said surface (10) caused by the passage of said R and p waves, and
   (ii) the tilt $(dw/dx)_{R,p}$ of said surface (10) caused by the passage of said R and p waves; and

- 11 -

(b) correlating the measured tilt and velocity/
   displacement data to cancel said effect of the
   R wave-induced noise.


2. A geophysical exploration method according to
Claim 1, wherein the vertical velocity $(dw/dt)_{R,p}$
and tilt $(dw/dx)_{R,p}$ of the surface (10) of the
formation (11) caused by the passage of the p and R
waves at the measurement point (C), are used to identify
the time of arrival of the p wave at the measurement
point (C) using the relationship:

$$(dw/dt)_p = (dw/dt)_{R,p} - C_R (dw/dx)_{R,p}$$

where $(dw/dt)_p$ is the vertical velocity attributable
to the passage of the p wave.


3. Geophysical exploration apparatus for determining
the vertical location of a subterranean seismic
energy reflection boundary (12) in a geologic
formation (11), said apparatus including sensing
means (21 to 32) for sensing the time of arrival of an
artificially-induced p wave at a point (C) on the
surface (10) of the geologic formation (11) after
reflection from said boundary (12),
characterised in that in order to minimise the effect
of extraneous surface waves on the sensing of the time o
of arrival of the p wave at said point (C), said
sensing means comprises:
- first measuring means (26) for measuring at
  said point (C) the vertical velocity
  $(dw/dt)_{R,p}$ or displacement $(w)_{R,p}$ of the
  surface (10) caused by the passage of both
  said p waves and said extraneous waves,
- second measuring means (22) for measuring at
  said point (C) the tilt $(dw/dx)_{R,p}$ of the surface
  (10) caused by the passage of said p waves
  and said extraneous waves; and
- signal combining means (23, 27 to 31)

0136084

- 12 -

arranged to receive the measured velocity/
displacement and tilt data from the first and second
measuring means (26,22) and to combine this data in
a manner minimising the effect of the said extraneous
waves.

4. Geophysical exploration apparatus according
to Claim 3, wherein the first and second measuring
means (26,22) are both arranged to produce electrical
outputs, and are respectively constituted by a
vertical velocity geophone (26) and by a tilt
transducer (22), the signal combining means being
constituted by circuitry (23, 27 to 31) arranged
to receive said outputs and to scale and subtract
them from each other whereby to produce a signal
indicative of the vertical surface velocity at
said point (C) attributable to the passage of said
p wave.

0136084

1/1

*Fig-1*

VERTICAL VELOCITY GEOPHONE

ADJUSTABLE GAIN $kR_0$

$R_0$

TILT TRANSDUCER

ADJUSTABLE $C_R$

w'

*Fig-2*